# EUROPEAN PATENT SPECIFICATION

(11) **EP 4 434 323 B1**
(45) Date of publication and mention of the grant of the patent: **06.05.2026**
(21) Application number: 24163315.5
(22) Date of filing: 13.03.2024
(51) Int. Cl.: B65B 13/26, A01F 15/14, A01F 15/04, A01F 15/08

(54) **BALER AND METHOD OF BINDING A BALE**
BALLENPRESSE UND VERFAHREN ZUM BINDEN EINES BALLEN
PRESSE À BALLES ET PROCÉDÉ DE LIAGE D'UNE BALLE

(30) Priority: 14.03.2023 GB 202303724
(43) Date of publication of application: 25.09.2024
(73) Proprietor: Kuhn-Geldrop B.V., 5667 KP Geldrop (NL)
(72) Inventor: HOL, Jan Johannes Judocus, 5427 PJ. BOEKEL (NL)
(74) Representative: Murgitroyd & Company

(56) References cited:
- EP-B1- 2 908 618
- GB-A- 1 017 017
- US-A- 3 101 963
- US-A1- 2020 084 972

## Description

The present invention relates to a baler and a method of binding a bale. The invention also relates to a baler comprising a bale forming channel, a reciprocating plunger and a binding system for binding a bale in the bale forming channel.

It is known to provide a baler for pressing bales with a reciprocal plunger, whereby the bale is bound by tying a plurality of twine loops around the bale.

The twine for binding the bale is supplied by two supplies per twine loop, one for the top side and one for bottom side of the bale. The closing of the loop around the finished bale is done by tying two knots. The basic principle of such a bale binding system is well described in US4074623 and EP1584227.

US4074623 is an example of a binding system as described above in which the twines are tied with a conventional knot. EP1584227 is an example of a binding system as described above in which the twines of the second knot are tied with a loop knot so as not to have loose twine ends cut from the strands between the first and second knot.

The binding of the bale is necessary to hold the bale under compression; the expansion of the bale as it is ejected from the baling channel puts a lot of tension on the binding twine. The breaking resistance of the binding twine and the knot(s) in the twine determine the maximum possible compression of the material in the bale. A high compression is desirable as the higher the compression the more efficiently the bale material can be stored and transported.

EP1584227 suggests solutions for releasing the twine strands before the cutting of the second knot to form a loop knot as a second knot. The solutions suggested are complicated and not sufficiently reliable with different twine strengths and brands and will require many changes to the actual knotter design and are therefore not retrofittable on an existing knotter.

Another baler comprising a knotter system is known from EP2908618, which discloses forming two consecutive knots, wherein the second knot is a loop knot. To form those knots, the strands are held in notches in a rotating twine disc by a retainer, and drive means are adapted for rotating the twine disc during a first turn whilst clamping twines for forming the first knot, and for rotating the twine disc during a second turn whilst letting twines slip for forming the second knot. The twine receiver is provided with biasing means for setting a bias for the clamping action by the twine holder. The biasing means are adapted to set a first bias during the first turn, and a second bias during the second turn. The first bias is chosen such that the twines are firmly clamped , while the second bias is chosen such that the twines are allowed to slip out of the twine receiver.

It is an object of the present invention to provide a solution to one or more of the problems set out above, thereby allowing the compression of the bale to be increased without causing the twine loops to break and/or avoiding or mitigating one or more of the disadvantages of the system described in EP1584227.

According to the present invention there are provided a binding system for a baler, a baler that includes a binding system, and a method for binding a bale as defined by the claims.

According to the invention there is provided a baler according to claim 1. The invention enables a bale to bound in a manner such that at least the second knot comprises a loop knot, which enables compression of the bale to be increased without causing the twine loops to break, by providing a relatively simple mechanical solution that reliably produces loop knots.

In some embodiments, the depth of the second clamping notch, relative to an outer circumference of the first rotary disk, is greater than the depth of the first clamping notch.

The twine holder can include a second rotary disk. The second rotary disk can be fixed for rotation with the first rotary disk about a rotation axis. The second rotary disk can include a first clamping notch. The second rotary disk can include a second clamping notch. The clamping plate can be arranged to cooperate with the retainer to hold the twines located in one of the notches of the second rotary disk.

The notch in which the twines are located being determined by the operational condition of the binding system. During formation of the first knot the twines are located in the first clamping notch of the first rotary disk, and optionally are located in the first clamping notch of the second rotary disk. During formation of the second knot the twines are located in the second clamping notch of the first rotary disk, and optionally are located in the second clamping notch of the second rotary disk.

The first rotary disk can include a plurality of first clamping notches. The first rotary disk can include a plurality of second clamping notches. The first and second notches can alternate around the periphery of the first rotary disk. The second rotary disk can include a plurality of first clamping notches. The second rotary disk can include a plurality of second clamping notches. The first and second notches alternate around the periphery of the second rotary disk.

The first and second rotary disks can be fixed to one another such that the first clamping notch in the first rotary disk is rotationally aligned with the first clamping notch in the second rotary disk. The first and second rotary disks can be fixed to one another such that the second clamping notch in the first rotary disk is rotationally aligned with the second clamping notch in the second rotary disk. For embodiments wherein each of the first and second rotary disks includes a plurality of first clamping notches and a plurality of second clamping notches, each first clamping notch in the first rotary disk can be rotationally aligned with a respective one of the first clamping notches in the second rotary disk, and each second clamping notch in the first rotary disk can be rotationally aligned with a respective one of the second clamping notches in the second rotary disk.

The clamping notches can be arranged asymmetrically around the periphery of the first rotary disk. Optionally, the clamping notches can be arranged asymmetrically around the periphery of the second rotary disk.

The clamping plate can be positioned between the first and second rotary disks.

The first rotary disk is arranged to rotate relative to the clamping plate. Optionally the second rotary disk can be arranged to rotate relative to the clamping plate.

The retainer can be resiliently biased towards the center of the first rotary disk. Optionally, the retainer can be resiliently biased towards the center of the second rotary disk.

In a condition wherein the twines are located in the second notch of the first rotary disk, and the second knot is being stripped off the bill hook by the stripper element, the first rotary disk can be arranged to rotate the twines beyond an end of the clamping plate, thereby releasing the twines from the grip of the clamping plate and/or the retainer. Optionally, in a condition wherein the twines are located in the second notch of the second rotary disk, the second rotary disk can be arranged to rotate the twines beyond an end of the clamping plate, thereby releasing the twines from the grip of the clamping plate and/or the retainer.

Optionally, in a condition wherein the twines are located in the second notch of the second rotary disk, the second rotary disk can be arranged to rotate the twines beyond the curved outer surface, thereby releasing the twines from the grip of the clamping plate and/or the retainer. The curved outer surface can comprise an arc having a radius that extends from a rotation axis of the second rotary disk, to the curved outer surface.

The radius defining the arc of the outer surface of the clamping plate, can have a radial distance that is greater than a radial distance from the rotation axis of the second rotary disk, to the inner most part of the second notch.

The stripper element can include a screen. The screen can be arranged to move with the stripper element. The screen can be arranged to support the twines during at least part of the first knot forming process and/or to support the twines during at least part of the second knot forming process.

The twine can be located in a first position on the screen. The twine can be located in a second position on the screen. The first position is different from the second position. The selection between the first and second positions on the screen can depend on the rotational position of the first rotary disk, and optionally the rotational position of the second rotary disk. The first position can be a position in which the twine is cuttable by the cutter. The second position can be a position in which the twine is not cuttable by the cutter.

The screen can include an upper surface. The first position can be located on the upper surface. The screen can include a side surface. The side surface can be arranged perpendicularly to the upper surface. The second position can be located on the side surface.

Rotation of the second clamping notch beyond an end of the clamping plate and / or beyond the curved outer surface can be achieved by locating an additional gear stretch on a drive disk, for example after a gear stretch for driving rotation of the first rotary disk for forming the second knot, in the direction of rotation of the drive disk. For embodiments, including a second rotary disk that is fixed for rotation with the first rotary disk, the gear stretch drives rotation of the first rotary disk also rotates the second rotary disk.

In some embodiments, the first knot comprises a loop knot. In embodiments, wherein the first knot comprises a loop knot and the second knot comprises a loop knot, the compression of the bale can be increased further without causing the twine loops to break.

The clamping plate can be pivotally attached to a mounting. The clamping plate can be arranged to pivot with respect to the first rotary disk, and optionally the second rotary disk, thereby adjusting the clamping force applied to the twines. The clamping plate can be arranged to pivot to a position wherein the twines are released.

The twine holder can include an actuation formation that is arranged to pivot the clamping plate. The actuation formation can be arranged to pivot the clamping plate to the position wherein the twines are released.

The actuation formation can comprise a protrusion. The protrusion can be located on the first rotary disk. The protrusion can be located on the second rotary disk. The protrusion can be located on a member, such as a hub, that connects the first rotary disk to the second rotary disk. The protrusion can be located on the clamping plate, for example on an inner surface of the clamping plate. The inner surface can face towards the hub.

In some embodiments the twine holder includes a second actuation formation that is arranged to pivot the clamping plate. The second actuation formation can be arranged to pivot the clamping plate to the position wherein the twines are released. The second actuation formation can be arranged to interact with the first actuation formation to pivot the clamping plate to the position wherein the twines are released. For example, the actuation formation can be arranged to rotate relative to the second actuation formation. The second actuation formation can be arranged to interact with the actuation formation in a condition wherein the second actuation formation is rotationally aligned with the actuation formation.

The second actuation formation can comprise a second protrusion. The second protrusion can be located on the first rotary disk. The second protrusion can be located on the second rotary disk. The second protrusion can be located on a member, such as a hub, that connects the first rotary disk to the second rotary disk. The second protrusion can be located on the clamping plate, for example on an inner surface of the clamping plate.

According to another aspect, there is provided a method according to claim 13. The invention for example, enables a bale to bound in a manner such that at least the second knot comprises a loop knot, which enables compression of the bale to be increased without causing the twine loops to break, by providing a relatively simple mechanical solution that reliably produces loop knots.

The binding system can include a stripping element arranged to strip the first and/or second knot from the bill hook. The stripping element can include a screen. The method can include locating twine on the screen in a first position when forming the first knot; and locating twine on the screen in a second position when forming the second knot.

The baler can be arranged according to any configuration described herein.

Various embodiments of the invention will now be described by way of example with reference to the accompanying drawings, in which:
Figure 1 is an isometric view showing the main components of a baling machine according to a first embodiment of the invention;
Figure 2 is a partial sectional side view of part of the baler shown in Figure 1;
Figure 3 depicts a twine loop tied around a finished bale and a pair of twines looped around a partially completed bale;
Figure 4 is an isometric view of a knotter from a first angle included in the embodiment of Figure 1;
Figure 5 is an isometric view of the knotter of Figure 4 from a second angle;
Figure 6 is an isometric view of the knotter of Figure 4 from a third angle;
Figure 7 is a side view of a bill hook included in the embodiment of Figure 1;
Figures 8a, 8b, 8c and 8d are isometric views of the bill hook of Figure 7 in different operational conditions;
Figure 9 is a plan view of a prior art twine disk having asymmetric notches for comparison purposes;
Figure 10 is a side elevation of the knotter of Figure 4 illustrating axial movement of the work wheel;

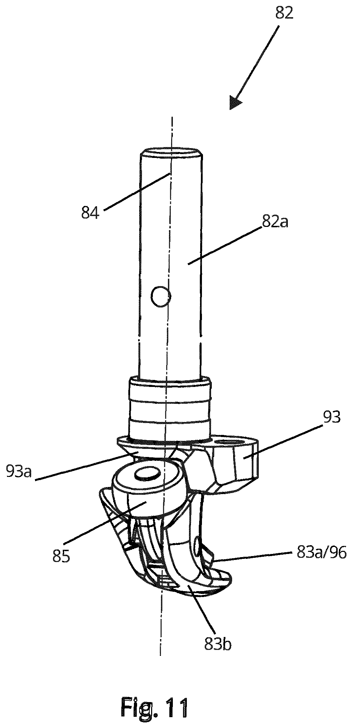

Figure 11 is an isometric view of the bill hook of Figure 7;
Figures 12 is an isometric view of an alternative knotter that can be used in the embodiment of Figure 1, and shows the twines, towards the end of a first knot forming process, being positioned in a first position on a screen so that twines are located in front of a cutter so that the cutter is able to cut the twines;
Figure 13 is an isometric view of the alternative knotter of Figure 12, showing the twines, towards the end of the second knot forming process, positioned in a second position across the screen in a manner such that the cutter is unable to cut the twines;
Figure 14 is a 3D view of a twine holder accruing to the invention including first and second rotary disks, and a retainer, which shows how the retainer is arranged with respect to rotary disks;
Figure 15 is side view of the twine holder of Figure 14, and shows the rotational position of the twine disks when the twines are placed into a first notch;
Figure 16 shows the twine holder of Figure 14, in particular the rotational position of the rotary disks during formation of the first knot;
Figure 17 shows the twine holder of Figure 14, in particular the rotational position of the disks when a first knot is stripped off the bill hook, the twines are cut and the twines are put into a second notch, which has a different depth from the first notch;
Figure 18 shows the twine holder of Figure 14, in particular the rotational position of the disks during formation of the second knot;
Figure 19 shows the twine holder of Figure 14, in particular the rotational position of the disks during formation of the second knot when the twines are put between the lower part of the bill hook and a catching element of the bill hook;
Figure 20 shows the twine holder of Figure 14, in particular the rotational position of the disks during stripping of a second knot from the bill hook, wherein the twines have moved past an end of a clamping plate and the twines are pulled out of the twine holder by the cutter;
Figure 21 shows a variant to the twine holder of Figure 14 14, wherein each rotary disk has asymmetrically positioned notches;
Figure 22 shows a variant to the twine holder of Figure 15, wherein each rotary disk has asymmetrically positioned notches;
Figure 23 shows a variant to the twine holder of Figure 16, wherein each rotary disk has asymmetrically positioned notches;
Figure 24 shows a variant to the twine holder of Figure 17, wherein each rotary disk has asymmetrically positioned notches;
Figure 25 shows a variant to the twine holder of Figure 18, wherein each rotary disk has asymmetrically positioned notches;
Figure 26 shows a variant to the twine holder of Figure 19, wherein each rotary disk has asymmetrically positioned notches;
Figure 27 is a side view of a twine holder, for use in a second embodiment of the invention, wherein a clamping plate is pivotally attached to a mounting and is arranged to pivot with respect to first and second rotary disks, wherein the clamping plate is shown in a first operational orientation; and
Figure 28 is a side view of the twine holder in Figure 27, wherein the clamping plate is shown in a second operational orientation.

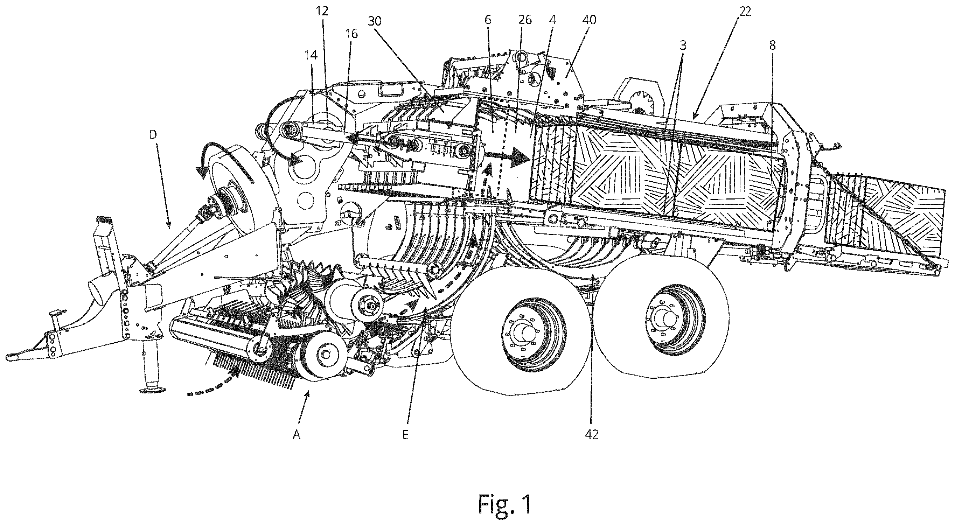

A baler according to the invention is shown in Figure 1. The baler includes a baling chamber 26 that is defined by a baling casing 22 comprising top and bottom plates 3 and two side walls 4, one of which has been omitted from the drawing to show the interior of the chamber 26. The baling chamber 26 comprises a channel having an inlet end 6 and an outlet end 8. At the inlet end 6, the channel is closed by a plunger 30 that can be driven into the baling chamber 26 in a reciprocating manner. In this example, the plunger 30 is driven from a rotating drive axle 12 via a pair of drive arms 14, 16. Bales B are formed in the baling chamber.

In addition, the baler includes a pick up mechanism A for picking up cut bale material (for example grass and straw) from the ground, a feed mechanism E for feeding the bale material into the baling chamber 26, the feed mechanism having a feed duct 28, a set of needles 42 for feeding binding twine through the baling chamber 26 and a drive mechanism D for transmitting drive to the drive axle 12 from the drive output of a towing vehicle (not shown). These components are all conventional and so will not be described in detail.

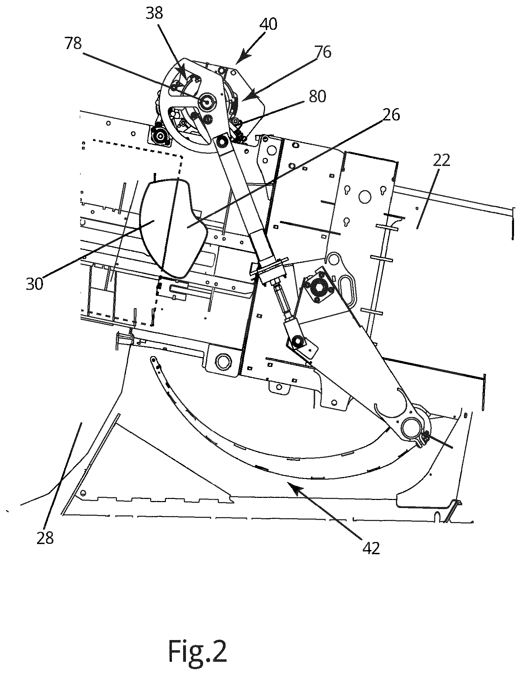

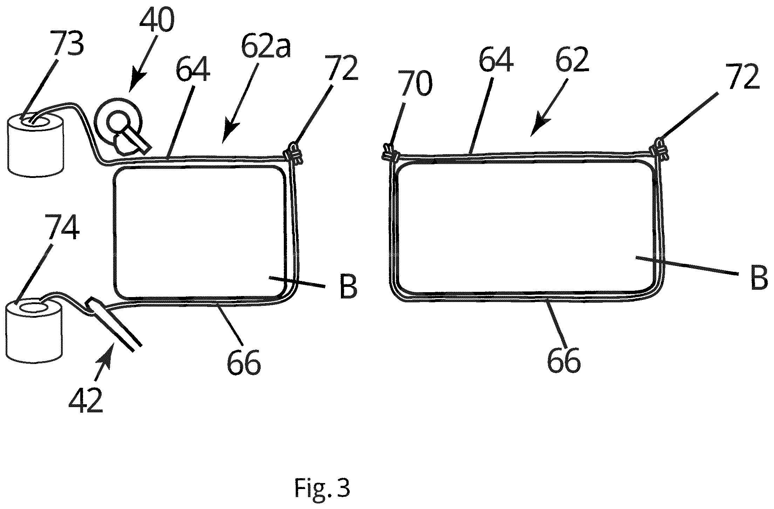

The baler shown in figures 1 and 2 is similar in many respects to the baler described in EP- 1584227-A1 or WO 2022/023530. Bale material is introduced into the bale chamber 26 through the feed duct 28. The plunger 30 compresses bale material in the bale chamber to produce the bale B. As the bale is produced, two twines 64,66 are drawn from twine sources 73,74 and laid along the upper and lower sides of the bale, as shown in figure 3. Upon completion of the bale B, the twines 64, 66 are brought together by a needle 42 and the two twines 64,66 are tied together by a knotter 40, which is driven via a clutch 38, to form a twine loop 62 that is stretched around the bale B to maintain the bale material in compression after the bale is ejected from the bale case 22.In this example, the knotter 40 includes a rotary bill hook 82, which is configured to tie two knots successively during each complete operating cycle. As illustrated in figure 3, a first knot 70 is tied to complete the twine loop 62 around the completed bale B and a second knot 72 is then tied to start a new twine loop 62a for the next bale. The twines are severed between the two knots 70, 72. In this example, the first and second knots 70,72 are both right-handed knots and they are tied successively by the same bill hook. Also, in this example, the second knot 72 is a loop knot, whereas the first knot 70 is a conventional knot. The strength of the twine loop is therefore limited by the strength of the conventional first knot 70, which has a lower breaking strength than the loop knot that forms the second knot 72. Alternatively, in certain embodiments of the invention, the first knot 70 and the second knot 72 may both be loop knots.

The binding system and the method for binding a bale according to the present invention are similar in most respects to the binding systems and the methods for binding bales described in EP-1584227-A1 or WO 2022/023530.

However, in certain embodiments of the present invention, the first knot and the second knot are both loop knots.

In certain other embodiments, the second knot 72 is a loop knot and the first knot 70 is a conventional knot.

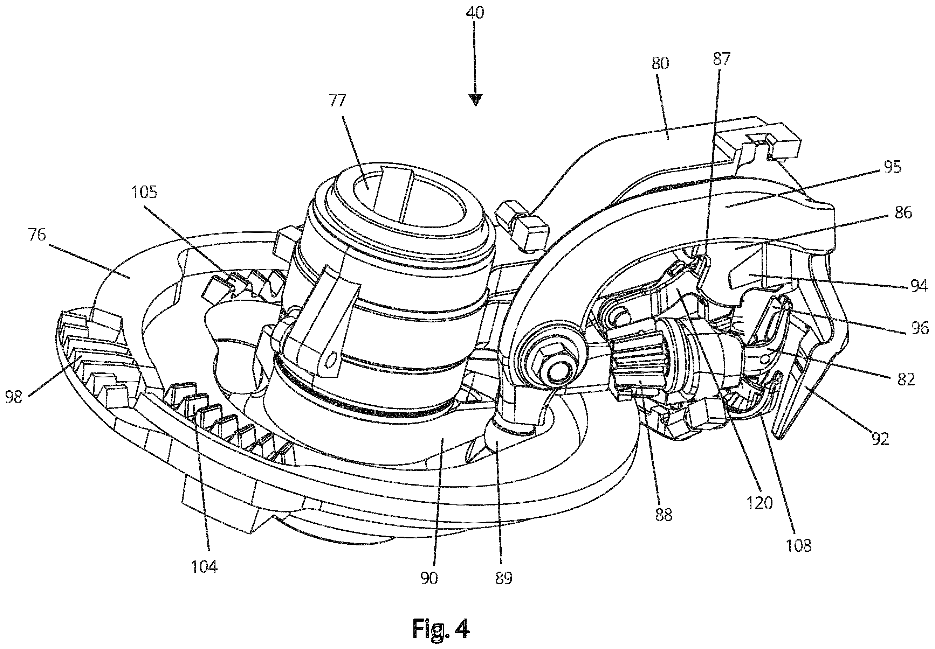

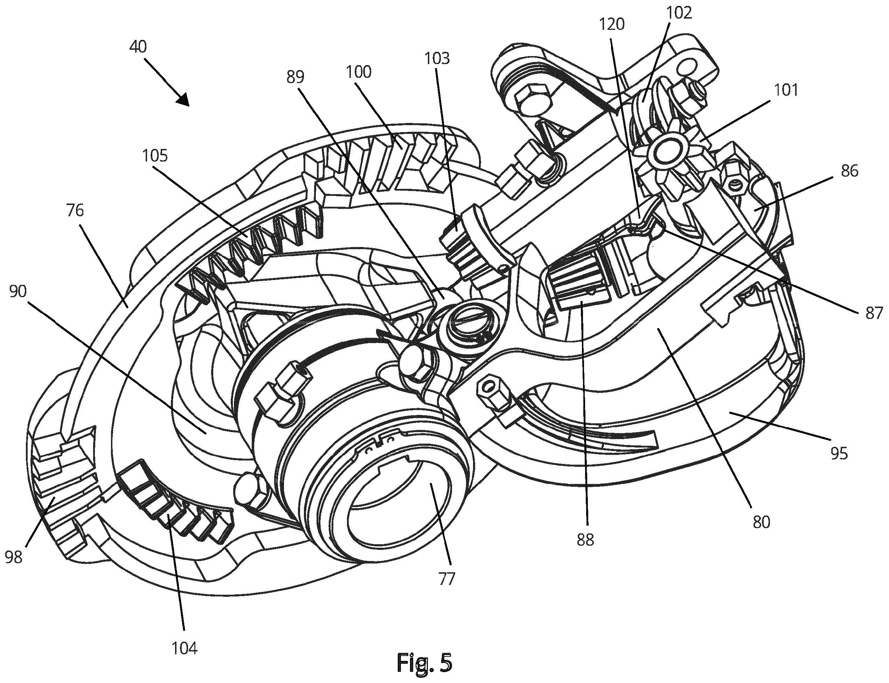

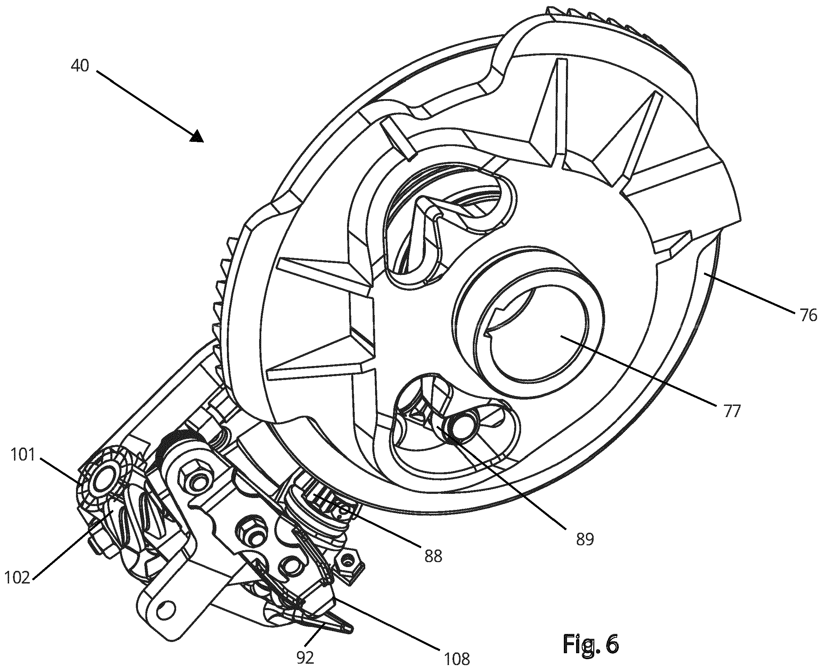

A knotter 40 according to an embodiment of the present invention is shown in more detail in figures 4 to 6. The knotter 40 is similar in many respects to the knotter described in EP-1584227-A1 and therefore will not be described in full detail.

The knotter 40 comprises a circular drive disk 76 that is attached through a hub 77 to a drive shaft 78. The knotter 40 also comprises a frame 80, a rotary bill hook 82 mounted on an end of a shaft 82a for rotation about an axis 84, and a twine holder 86having at least one rotary disk 86a,86b that has a plurality of notches 87 in its perimeter for holding the twines against a retainer 120. Typically, the twine holder 86 includes a first rotary disk 86a and a second rotary disk 86b, each of which has a plurality of notches 87 formed in its perimeter. The knotter 40 includes a release assembly 95, which is pivotable to cut the twines 64,66 when forming the first knot and to release the twines 64,66 from the twine holder 86 when forming the second knot. The release assembly 95 includes a cutter 94 for severing the twine strands 64,66. The release assembly 95 also includes a stripper arm 92, which can be actuated to strip each of the first and second knots from the bill hook 82. Pivoting movement of the release assembly 95 is controlled by a cam follower 89 that engages a cam track 90 in the drive disk 76.

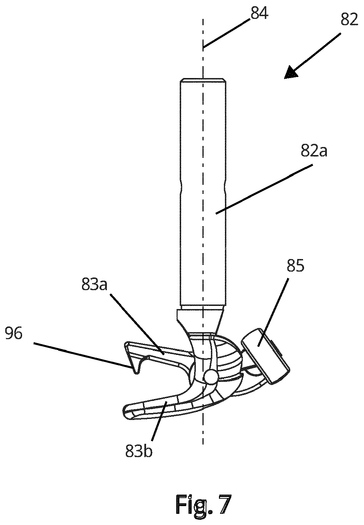

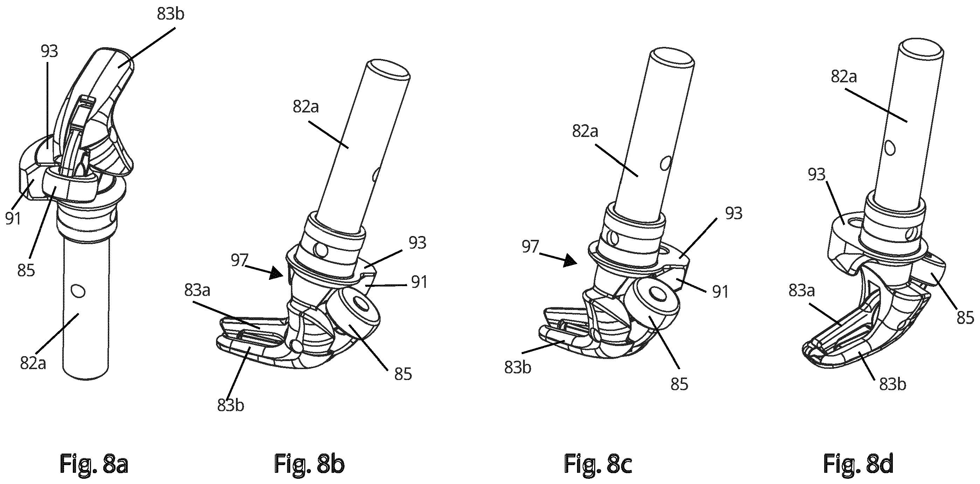

The rotary bill hook 82, which is shown in more detail in figures 7 and 8a-8d, includes a fixed lower lip 83b and a pivotable upper lip 83a. The lower lip 83b is fixed to the shaft 82a, towards one end thereof. The pivotable upper lip 83a includes a twine retaining formation 96, which is sometimes referred to as a catching element 96. The catching element is located towards a distal end of the upper lip 83a and is oriented downwards towards the lower lip 83b. The catching element 96 moves with the upper lip 83a, as the upper lip 83a pivots. Typically, the catching element 96 is an integral part of the upper lip 83a. The pivotable upper lip 83a moves between open and closed configurations and is controlled by a cam follower 85, which engages a cam track 91 provided on a collar 93 that surrounds the bill hook shaft 82a. Rotation of the bill hook 82 about the axis 84 is driven by a pinion 88 that engages first and second gear stretches 98,100 on the drive disk 76.

The rotary disks 86a,86b of the twine holder 86 are driven by a worm gear 101, a worm screw 102 and a bevel gear 103 that engages third and fourth gear stretches 104, 105 on the drive disk 76.

Operation of the knotter 40 is substantially as described in EP-1584227-A1, except as described below.

The bill hook 82 is rotatable between a first position in which the bill hook engages the twines and a second position in which a knot formed by the knotter 40 is stripped from the bill hook 82 by the stripper arm 92. The upper lip 83a is configured in a closed configuration to retain a twine to the bill hook 82 or an open configuration to release the twine from the bill hook 82. If a conventional knot is being formed on the bill hook 82, the upper lip 83a can remain closed. In this condition, short twine ends will be pulled through the partially formed knot to make the conventional knot. If a loop knot is being formed on the bill hook, the upper lip 83a can be configured to adopt the open configuration to release the retained twine from the bill hook 82 after the knot is removed from the bill hook 82 by the stripper arm 92, so that the cut end of the twine is not pulled through the knot. In this embodiment the upper lip 83a is biased by a resilient biasing element 108 towards the closed configuration and is moved to the open configuration by an opening assembly 97, which comprises the collar 93 and the cam follower 85.

The upper lip 83a can thus be opened to release the twine without rotating the bill hook 82 beyond the second position. Alternatively, it is also possible that the upper lip 83a is not biased by the resilient biasing element 108 towards the closed configuration and the cupper lip 83a is normally open and only closed by the strands of the twine 64,66.

Alternatively, the upper lip 83a can be moved passively to the open configuration. For example, opening of the upper lip 83a can be achieved by inactivating the resilient biasing element 108 or reducing/counteracting the biasing force, so that the upper lip 83a is moved to the open configuration by tension in the twine. Inactivating the resilient biasing element 108 or reducing/counteracting the biasing force can be achieved for example by modifying the configuration of the resilient element 108 so that only at the position of the bill hook 82 where the knot is stripped off (and not if it is turned to form the knot) the upper lip 83a is not affected by the resilient biassing element 108 and the upper lip 83a is free to move (partly) upward. When the knot is formed and not yet stripped off the bill hook 82 the twine that is wound around the bill hook 82 will hold the upper lip 83a, and hence catching element 96, down. As soon as the knot is stripped off the bill hook 82 the upper lip 83a, and hence the catching element 96 is then free to move upward. This also is the case when the upper lip 83a has a normally open position without a resilient element 108 to hold the upper lip 83a in the closed position. The upward movement of the upper lip 83a may result as a reaction to the pulling force of the twine loop but could alternatively also be assisted by an additional counter-biasing resilient element.

If the bill hook 82 is turned for forming the loop the resilient biassing element 108 will force the catching element down.

The process of producing the knot is well described in text and pictures of WO2018202588A1 and in WO 2022/023530.

The knotter 40 comprises a set of individual knotters provided crosswise on top of the bale chamber 26 at intervals. Each knotter has an associated needle 42 for forming an individual loop around a finished bale B. A dog clutch connects the knotters and their needles 42 to a drive source to commence a tying operation.

The twine holder 86 is mounted next to the bill hook 82. The needle 42 swings back and forth across the bale chamber 26 to deliver twine to the knotter. In particular, the needle 42 delivers twine to the twine holder 86 and to the bill hook 82 during operation of the knotter 40.

The twine holder 86 preferably includes first and second disks 86a, 86b. The first and second disks 86a,86b are fixed together via a central hub and are locked for rotation with one another. Each disk 86a,86b is provided with at least two notches, which includes a second notch 87a,87a' and a first notch 87b,87b'. In some embodiments, each rotary disk 86a,86b has a least two second notches 87a,87a' and at least two first notches 87b,87b'. The rotary disks 86a,86b are typically fixed to one another such that the second notches 87a in the first rotary disk 86a are aligned with respective second notches 87a' in the second rotary disk 86b, and the first notches 87b in the first rotary disk 86a are aligned with respective first notches 87b' in the second rotary disk 86b.

In an embodiment of the invention, the twine holder 86 is configured to release the twines timely when the bill hook 82 has finished its second turn to complete the knot and before or at the moment the knot is fully pushed/pulled off the bill hook 82 by the stripper arm 92. This helps to prevent the possibility that there will be loose twine ends or "tails" (waste) that will pollute the fodder or the environment. By releasing the twines 64,66 the loop of the second knot of the binding cycle will have longer ends. The release of the twines is achieved by the twine holder 86 described below.

In use, the needle 42 drapes the twines 64,66 across the billhook 100 and into the first clamping notches 87b,87b'. Rotation of the first and second rotary disks 86a,86b firmly grips the twines 64,66 between the disks and the retainer 120 and prevents them from escaping as the billhook 82 commences rotation. For example, the rotary disks 86a,86b may rotate a quarter of a turn to clamp the twines 64,66 in the first clamping notches 87b,87b'. At this time, the needle 42 moves downward wherein the two twines 64,66 on a rear side of the needle 42 are placed in the successive second notches 87a,87a' of the rotary disk for the second knot. While the needle 42 retracts, the billhook 82 continues to rotate to form the first knot. During this further rotation of the billhook 82, the billhook 100 opens again to enable the twines from first clamping notches to be positioned between the upper lip 83a and the lower lip 83b.

In some embodiments, the first notch 87b' has a different depth from the second notch 87a'. Typically, the second notch 87a' has a greater depth from the outer periphery of the rotary disk than the first notch 87b'. As in the prior art, during knot forming operations the twines 64,66 are placed in the notches 87a',87b' by the needle 42, as described in more detail below. The disks 86a,86b cooperate with a retainer 120. The retainer 120 comprises an arm, which is pivotally attached to a mounting, such as a frame, at a pivot axis 124. Typically, the pivot axis 124 is located towards one end of the arm. The retainer 120 includes a longitudinal recess that is arranged to receive peripheral parts of the first and second rotary disks 86a,86b. The retainer 120 is resiliently biased towards a center 126 of the disks 86a,86b, which is the pivot axis 126 of the rotary disks. By rotating the disks 86a, 86b, in the direction R, the twines 64,66 are clamped by the notches 87a',87b' in the disks 86a, 86b and the retainer 120 in the manner described below.

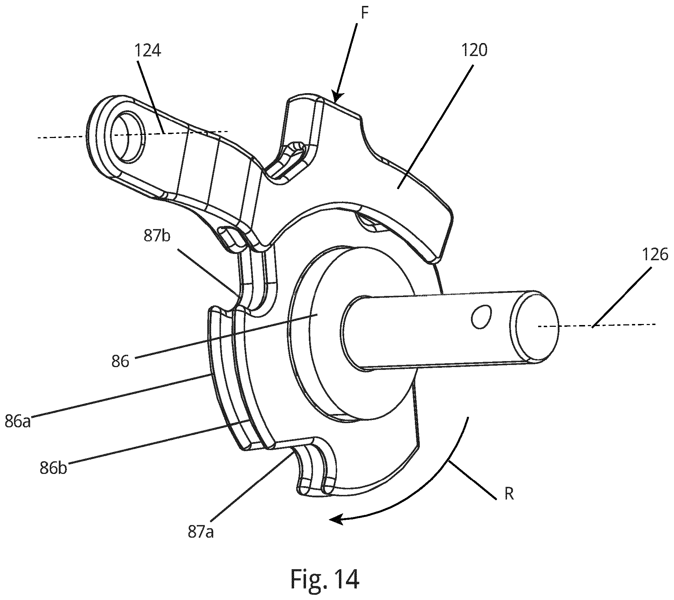

Rotation of the disks 86a,86b in the direction R shown in Figure 14 positions the twines 64,66 correctly relative to the rotating bill hook 82 and the cutter 94. In the prior art, the disks 86 rotate 90 degrees during the formation of the first and second knots and the disk has 4 notches. Each disk 86a,86b according to some embodiments of the invention include two regular depth first notches 87b' positioned at 180 degrees relative to each (i.e. diametrically opposite one another) other, and two second notches 87a' with an extended depth. Each second notch 87a' is located between the pair of first notches 87b'. The second notches 87a' are preferably arranged diametrically opposite one another.

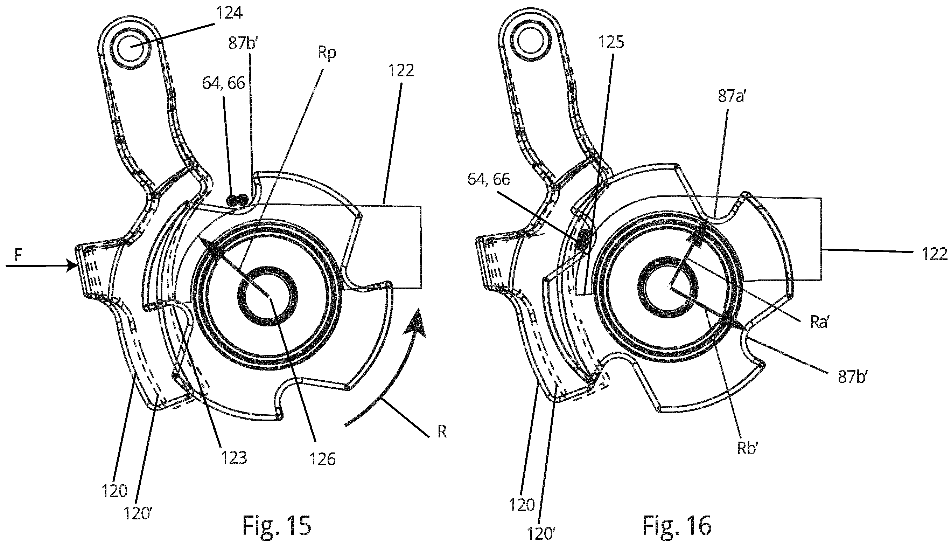

Each first notch 87b' has a depth that is similar to the state of the art twine holders. This first notch 87b' holds the twines 64,66 in cooperation with the retainer 120 that is biased towards the disks 86a,86b by a resilient element (not shown) during the formation of the first knot. Since the second notch 87a' has a substantially greater depth, that is, in figure 16, the radial distance Ra' from a central axis 126 of the disk is smaller than the radial distance Rb' from the central axis 126 of the disk, relative to the outer circumference of the disk 86a,86b. The difference in notch depth results in a biassing force F (see figure 15) generated by the resiliently biased retainer 120 on the clamped twines 64,66 in the second notches 87a' that is substantially lower than the biassing force F applied to the twines 64,66 in the first notch 87b'at least during the end of the rotation of the bill hook 82 during the formation of the second knot (120') compared to the first knot (120).

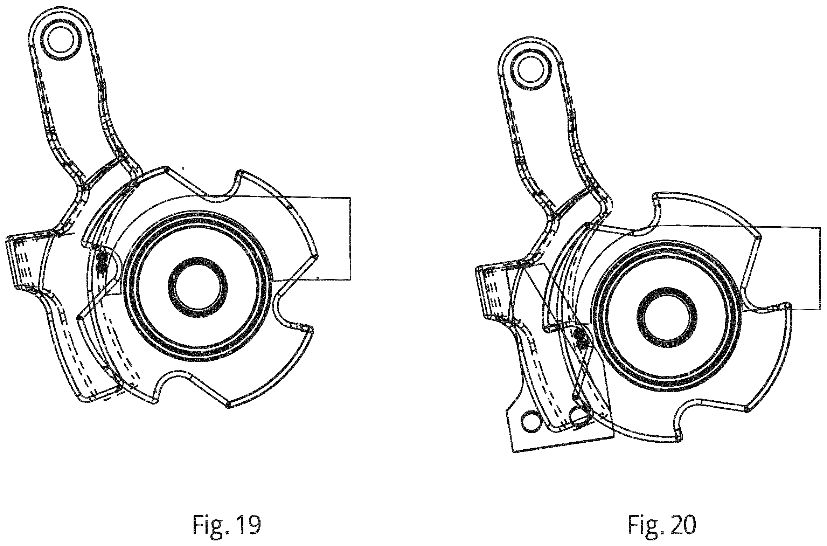

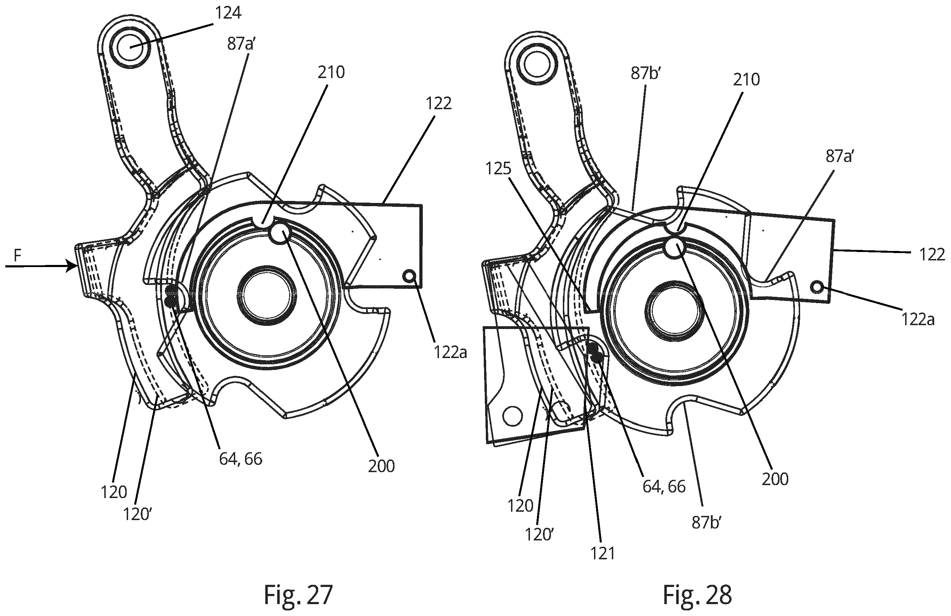

In order to hold the twines 64,66 during a first part of the rotation of the bill hook 82 during the second knot forming cycle, the extended depth of the second notch 87a' in cooperation with the retainer 120 is not able to hold the twines 64,66 sufficiently and therefore twine holder (the disks 86a,86b and retainer 120) are also provided with a clamping member, for example in the form of a clamping plate 122 positioned between the first and second disks 86a,86b. The clamping plate 122 is rotationally fixed to a mounting (not shown), and therefore the first and second rotary disks 86a,86b rotate relative to the clamping plate 122. An outer surface of the clamping plate 122 is curved. In preferred arrangements the outer surface is arcuate and has a radius Rp, from the central axis 126 of the rotary disks, that is approximately equal to the radius Rb of the of the first notch 87b'. The radius Rp is at least greater than the radius Ra of the lower part of the extended depth of the second notch 87a'. The extended depth of the second notch 87a' is compensated for by the clamping plate 122, in the following manner. The clamping plate 122 cooperates with the retainer 120 and clamps the twines 64,66 during the first part of the formation of the second knot while the second notch 87a' with the extended depth is moving the twines 64,66 between the clamping plate 122 and the retainer 120 so as to position the twines 64,66 correctly relative to the bill hook 82. At the end of the second knotting cycle (see figures 20 and 28) the rotary disks 86a,86b will position the twines 64,66 just beyond the end 125 of the clamping plate 122 and then the twines 64,66 will 'fall' into the second notch 87a' with the extended depth. The second notch 87a' with the extended depth, together with the retainer 120, is not be able to hold the twines 64,66 sufficiently firmly, which prevents the cutter 94 from cutting the twines 64,66, instead the twines 64,66 are pulled out of the second notch 87a' and the retainer 120 by the cutter 94. The second knot created has longer ends that are not pulled through the knot, accordingly a loop knot is formed and there is no waste of twine ends.

Optionally, the clamping plate 122 can have an inner curved surface, for example the inner curved surface is complementary to an outer curved surface of the hub connecting the first rotary disk 86a to the second rotary disk 86b. This enables the clamping plate 122 to wrap around an arcuate sector of the hub, which helps facilitate a good clamping arrangement with the retainer 120. Moving the twines 64,66 beyond the clamping plate 122 can be realized by at least one extra gear stretch (not shown) mounted on the drive disk 76 after the gear stretch 105 for the second knot.

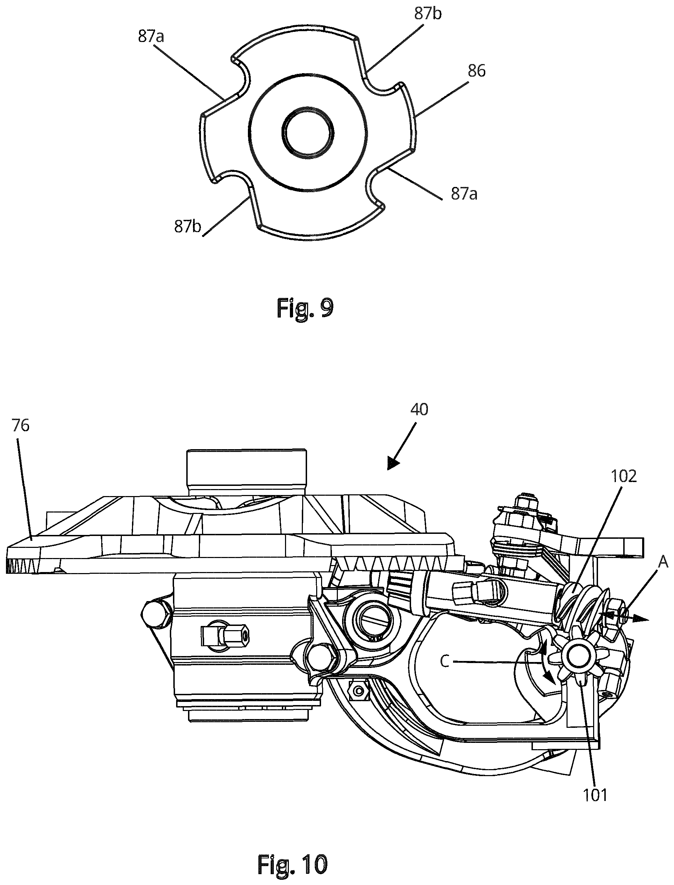

In an embodiment of the invention, releasing the twine ends by the twine holder 86 can be achieved by positioning the first and second notches 87a, 87b in the twine holder disk 86 asymmetrically (not at 90 degrees), for example as illustrated in figure 9, and figures 21-26 so as to have the twines held for the first knot between the first notch 87b 87b' and the retainer 120, and to have the second notch 87a,87a' positioned (at rest) just beyond the clamping plate 122. For example, the notches 87a, 87a', 87b, 87b' may be displaced at angles of approximately 65-70 degrees and 110-115 degrees, as illustrated in figure 9 and Fig 21-26. This arrangement helps ensure that the twines 64,66 are positioned beyond the clamping plate 122 at the end of the second knot for cycle.

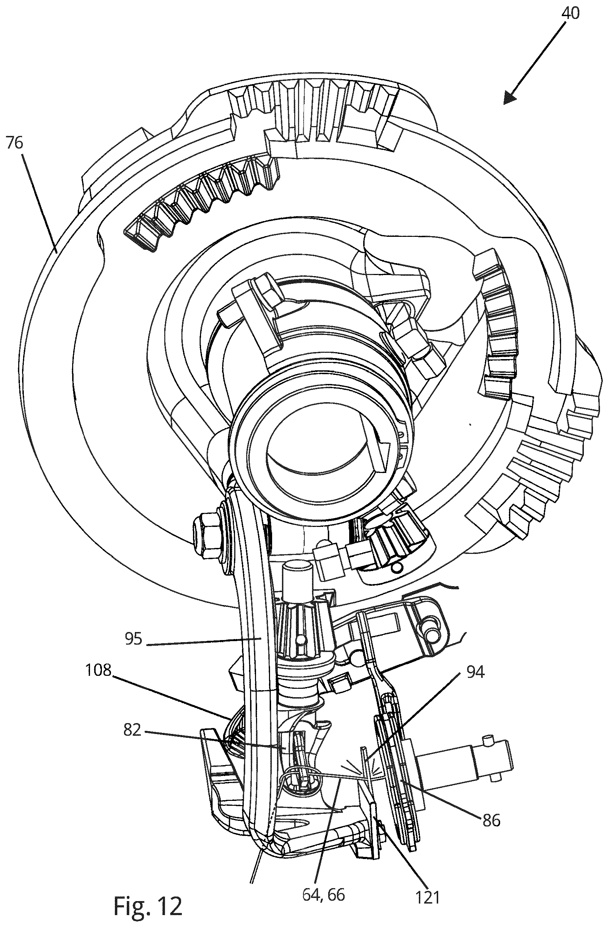

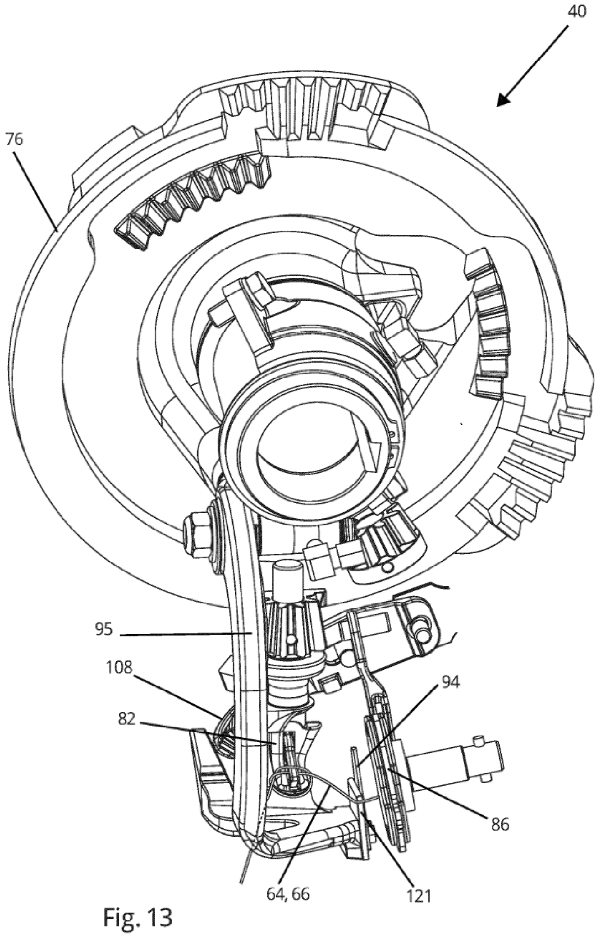

In some embodiments, as illustrated in figures 12 and 13, a screen 121 may be configured so that the twine 64 is guided across the screen 121 in two different positions, depending on the rotational position of the twine holder 86. For example, as shown in figure 12 in a first position of the twine holder 86 for tying the first knot the twine 64 is guided across the screen 121 in a high position, where it can be contacted by the cutter 94. For example, the first position can be located on an upper surface of the screen 121. As a result, the twine 64 is cut when the cutter 94 is activated. Alternatively, as shown in figure 13 in a second position of the twine holder 86 for tying the second knot the twine 64 is guided across the screen 121 in a low position, where it cannot be contacted by the cutter 94. As a result, the twine 64 is not cut by the cutter 94, allowing it to be pulled through the twine holder 86. For example, the screen can have a side surface that is arranged perpendicularly to the upper surface and the second position can be located on the side surface. The screen 121 does not have a cutting edge and therefore does not cut the twine 64.

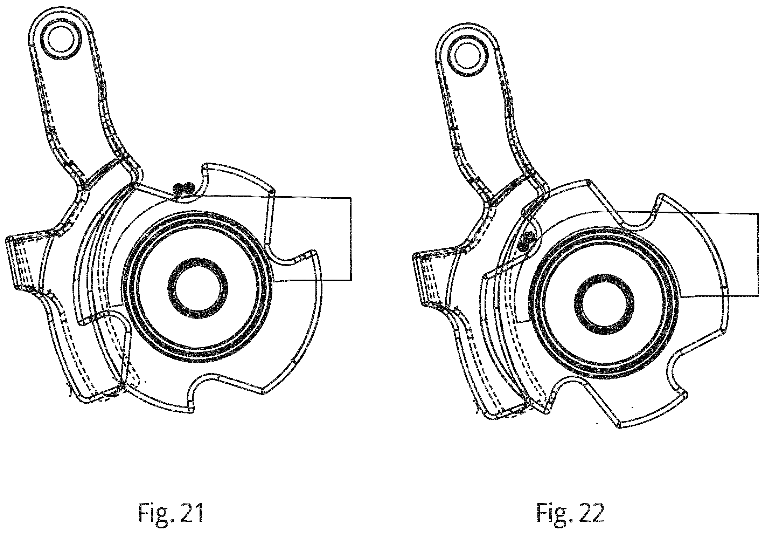

Operation of the knotter 40 will now be described. When forming the first knot, the twines 64,66 are inserted into the first clamping notches 87b,87b' (see figure 15 - symmetric rotary disks; and figure 21 - asymmetric rotary disks). The drive system rotates the first and second rotary disks 86a,86b to clamp the twines 64,66 between the retainer 120 and the clamping plate 122 (see figure 16 - symmetric rotary disks; and figure 22 - asymmetric rotary disks). The drive system rotates rotary bill hook 82 to wrap the twines 64,66 about the bill hook thereby tying the first knot in the twines 64,66. The stripper arm 92 is actuated to strip the first knot from the rotary bill hook 82. The cutter 94 cuts the twines 64,66. Optionally, the stripper arm 92 includes the screen and the twines 64,66 are positioned in the first position across an upper surface of the screen 121.

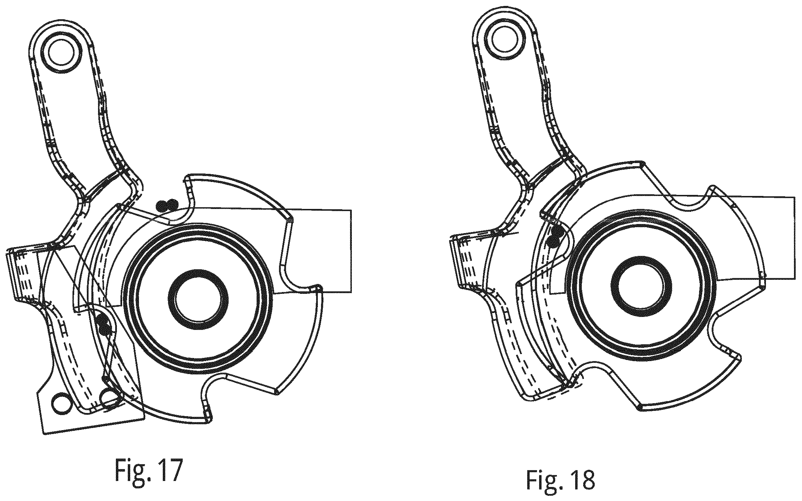

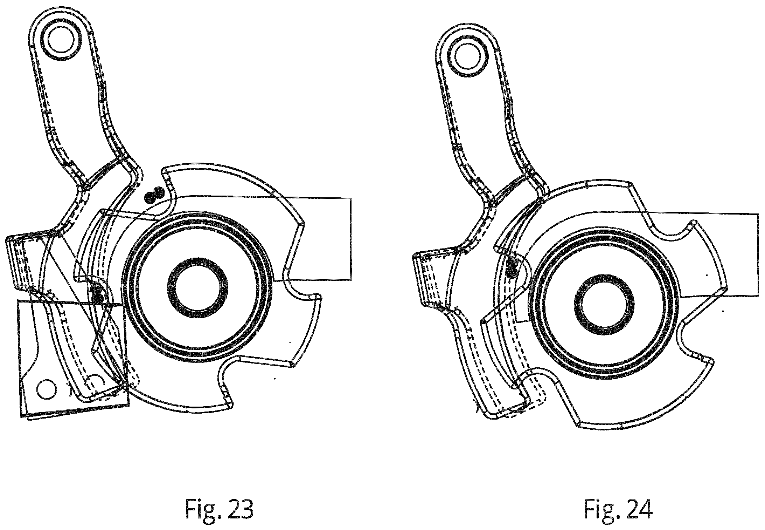

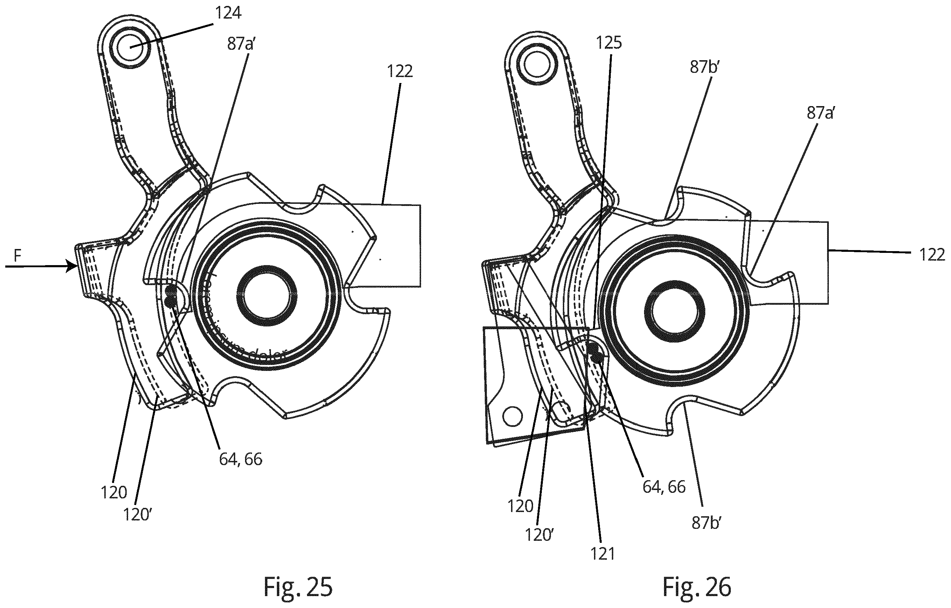

When forming the second knot, the twines 64,66 are inserted into the second clamping notches 87a,87a' (see figure 17 - symmetric rotary disks; and figure 23 - asymmetric rotary disks). The drive system rotates the first and second rotary disks 86a,86b to clamp twines 64,66 between the retainer 120 and the clamping plate (see figure 18 - symmetric rotary disks; and figure 24 - asymmetric rotary disks). In this condition, the twines do not contact the deepest part of the second clamping notches 87a,87a'. The drive system rotates rotary bill hook 82 to wrap the twines 64,66 about the bill hook thereby tying the second knot in the twines 64,66, which comprises a loop knot. As the second knot is nearing completion, the drive system rotates the first and second rotary disks 86a,86b such that the twines 64,66 slide over the curved outer surface of the clamping plate 122. As the twines 64,66 move past the end of the curved surface, and hence the end of the clamping plate 122, the twines fall into the deepest part of the second clamping notches 87a,87a' (see figure 20 - symmetric rotary disks; and figure 26 - asymmetric rotary disks). And the retainer 120 releases the twines 64,66, or at least significantly reduces the clamping force applied to the twines 64,66. The stripper arm 92 is actuated to strip the second knot from the rotary bill hook 82. The cutter 94 does not cut the twines 64,66 since the twines 64,66 are not tightly clamped by the retainer 120 and rotary disks 86a,86b. Optionally, the twines 64,66 are positioned in the second position across the screen 121.

In some embodiments, the clamping plate 122 is pivotable about a pivot axis 122a. For example, the clamping plate 122 can be pivotally attached to a mounting such as a frame. The pivotable mounting plate 122 enables the clamping force applied to the twines 64,66 to be adjustable. For example, it is possible to reduce the clamping force applied to the twines 64,66 at a particular time during the knot forming cycle to more precisely control the time at which the twines 64,66 are released. This helps to ensure, for example, that both twines 64,66 are released together rather than one at a time. This helps to improve the quality of the knot formed. The twine holder 86 can include a first actuation formation 200 and the clamping plate 122 can include a second actuation formation 210. The first actuation formation 200 can be attached to at least one of the first rotary disk 86a, the second rotary disk 86b and the hub that connects the first and second rotary disks 86a,86b together. The second actuation formation 210 can be located on an inner face of the clamping plate, that is a face that is oriented towards the hub. The first actuation formation 200 can comprise a first protrusion. The second actuation formation 210 can comprise a second protrusion. As the rotary disks 86a,86b and hub rotate relative to the clamping plate 122, the first actuation formation 200 rotates relative to the second actuation formation 210. The first actuation formation 200 is arranged to engage the second actuation formation 210 in a condition when the formations are rotationally aligned, thereby causing the clamping plate 122 to pivot away from the hub and releasing, or at least significantly reducing, the clamping force applied to the twines 64,66. Thus the twines 64,66 are no longer tightly clamped by the twine holder 86 within the second clamping notches 87a,87a'.

With this embodiment, it is not strictly necessary to have first and second clamping notches 87a,87b,87a',87b' which have different depths, that is, the depth of the first notches 87b,87b'can be equal to the depth of the second notches 87a,87a'. However, it can be beneficial to use the pivotable clamping plate 122 in conjunction with second notches 87a,87a' having a different depth from the first notches 87b,87b', in order to better control the knot forming process.

It will be appreciated by the skilled person that modifications can be made to the above embodiments that fall within the scope of the invention, for example the twine holder can include any suitable number of rotary disks.

The description presents exemplary embodiments and, together with the drawings, serves to explain principles of the invention. However, the scope of the invention is covered by the claims. Terms for components used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation. For example, the term "comprising" as used in this specification means "including" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" may be used for convenience of explanation usually with reference to the illustrations and are not intended to be ultimately limiting if an equivalent function can be achieved with an alternative dimension and/or direction.

The description herein refers to embodiments with particular combinations of configuration steps or features, however, it is envisaged that further combinations and cross-combinations of compatible steps or features between embodiments will be possible. Indeed, isolated features may function independently as an invention from other features and not necessarily require implementation as a complete combination. Any feature from an embodiment can be isolated from that embodiment and included in any other embodiment.

The term "at least one of" is to be interpreted in the sense of "and/or". For example, the term "at least one of the first notch and the second notch" is to be interpreted as meaning any one of the following: the first notch alone; the second notch alone; or the combination of the first and second notches. As another example, the term "at least one of the first notch, the second notch and the hub" is to be interpreted as meaning any one of the following: the first notch alone; the second notch alone; the hub alone; the combination of the first notch and the second notch; the combination of the first notch and the hub; the combination of the second notch and the hub; or the combination of the first notch, the second notch and the hub.

## Claims

1. A baler comprising a bale forming chamber (26), a reciprocating plunger (30) configured to compress bale material in the bale forming channel to form a bale (B) and a binding system for binding the bale (B) in a bale forming channel of a baler with a pair of twines (64,66) that pass around opposite sides of the bale, the binding system including: a knotter (40) including a rotary bill hook (82) having a rotational axis (84), a twine holder (86), a twine cutter (94) and a stripper element (92) arranged to remove at least some knots from the bill hook (82); wherein the binding system is configured to tie a first knot and a second knot successively in the twines during one full operating cycle of the binding system, at least the second knot is a loop knot, wherein the bill hook (82) is rotatable between a first position in which the bill hook (82) engages the twines and a second position in which a knot formed by the knotter (40) is stripped from the bill hook (82) by the stripper element (92); the twine holder (86) comprising a first rotary disk (86a) including a first clamping notch (87b) arranged to receive the twines (64,66) during formation of the first knot, and a second clamping notch (87a) arranged to receive the twines during formation of the second knot, a retainer (120) positioned adjacent a periphery of the first rotary disk (86a) arranged to cooperate with the first rotary disk (86a) to hold the twines at least during a part of the operating cycle, a clamping plate (122) arranged to cooperate with the retainer (120) to hold the twines (64,66), at least until the second knot is stripped off by the stripper element (92), wherein the binding system includes a drive system for rotating the first rotary disk (86a) to clamp the twines (64,66) in one of the first and second notches (87a,87b) against the retainer (120) and/or clamping plate (122), wherein the retainer (120) and/or clamping plate (122), at least during the stripping off of the knots by the stripper element (92), is arranged to apply a greater clamping force on the twines (64,66) in a condition wherein the twines (64,66) are located in the first clamping notch (87b) than the clamping force applied on the twines (64,66) in a condition wherein the twines are located in the second clamping notch (87a); wherein at least part of the clamping plate (122) includes a curved outer surface, in a condition wherein the twines (64,66) are located in the second notch (87b), the first rotary disk (86a) is arranged to rotate the twines (64,66) beyond the curved outer surface, thereby releasing the twines (64,66) from the grip of the clamping plate (122) and the retainer (120; the curved outer surface comprises an arc having a radius (Rp) that extends from a rotation axis (126) of the first rotary disk (86a); wherein the radius (Rp) defining the arc of the outer surface of the clamping plate (122) has a radial distance that is less than or equal to a radial distance (Rb) from the rotation axis (126) of the first rotary disk to the innermost part of the first notch (87b); and/or the radius (Rp) defining the arc of the outer surface of the clamping plate (122) has a radial distance that is greater than the radial distance (Ra) from the rotation axis (126) of the first rotary disk to the innermost part of the second notch (87a).

2. The baler of claim 1, wherein the depth of the second clamping notch (87a), relative to an outer circumference of the first rotary disk (86), is greater than the depth of the first clamping notch (87b).

3. The baler of claim 1 or 2, wherein the twine holder (86) includes a second rotary disk (86b), the second rotary disk (86b) is fixed for rotation with the first rotary disk (86a) about a rotation axis (126), the second rotary disk (86b) includes a first clamping notch (87b') and a second clamping notch (87a'), and the clamping plate (122) is arranged to cooperate with the retainer (120) to hold the twines (64,66) located in one of the notches (87a',87b') of the second rotary disk (86b).

4. The baler of claim 3, wherein the first and second rotary disks (86a,86b) are fixed to one another such that at least one first notch (87b) in the first rotary disk (86a) is rotationally aligned with at least one first notch (87b') in the second rotary disk (86b) and such that at least one second notch (87a) in the first rotary disk (86a) is rotationally aligned with at least one second notch (87a') in the second rotary disk (86b).

5. The baler of claim 3 or 4, wherein the clamping plate (122) is positioned between the first and second rotary disks (86a,86b).

6. The baler of any one of the preceding claims, wherein the first rotary disk (86a) is arranged to rotate relative to the clamping plate (122).

7. The baler of any one of the preceding claims, wherein the retainer (122) is resiliently biased towards the center (126) of the first rotary disk (86a).

8. The baler of any one of the preceding claims, wherein in a condition wherein the twines (64,66) are located in the second notch (87a) of the first rotary disk (86a), and the second knot is being stripped off by the stripper element (92), the first rotary disk (86a) is arranged to rotate the twines (64,66) beyond an end of the clamping plate (122), thereby releasing the twines (64,66) from the grip of the clamping plate (122) and the retainer (120).

9. The baler of any one of the preceding claims, wherein rotation of the second notch (87a) beyond an end of the clamping plate (122) and / or beyond the curved outer surface is achieved by locating an additional gear stretch on a drive disk (76) after a gear stretch (105) for operating the first rotary disk (86a).

10. The baler according to any one of the preceding claims, wherein the clamping plate (122) is pivotally attached (122a) to a mounting and is arranged to pivot with respect to the first rotary disk (86a) to a position wherein the twines (64,66) are released from the twine holder (86).

11. The baler according to claim 10, wherein the twine holder (86) includes an actuation formation (200,210) that is arranged to actuate the clamping plate (122) thereby causing the clamping plate (122) to pivot to the position wherein the twines (64) are released from the twine holder (66).

12. A method for binding a bale in a baler, the method including: providing a baler according to any one of the preceding claims; tying a first knot and a second knot successively in the twines (64,66) during one full operating cycle of the binding system, including: when forming the first knot, locating the twines in the first clamping notch (87b); clamping the twines (64,66) between the retainer (120) and the clamping member (122); the rotary bill hook (82) tying a first knot in the twines (64,66); the cutter (94) cutting the twines (64,66); when forming the second knot, locating the twines (64,66) in the second clamping notch (87a); the drive system rotating the first rotary disk (86a) to clamp twines (64,66), the retainer (120) clamping the twines (64,66) to the curved outer surface of the clamping member (122) as the twines move over the curved surface of the clamping member; the bill hook (82) tying a second knot wherein the second knot is a loop knot; the retainer (120) releasing the twines (64,66), or at least significantly reducing the clamping force applied to the twines (64,66), towards the end of the second knot forming cycle as the twines (64,66) pass an end of the clamping member (122) and/or an end of the curved surface of the clamping member (122), thereby preventing the twine cutter (94) from cutting the twines.

13. The method of claim 12, wherein the stripping element (92) includes a screen (121); and the method further includes locating twine on the screen (121) in a first position when forming the first knot; and locating twine on the screen (121) in a second position when forming the second knot.

## Patentansprüche

1. Eine Ballenpresse, die Folgendes beinhaltet: eine Ballenformkammer (26), einen hin-und hergehenden Kolben (30), der dazu konfiguriert ist, Ballenmaterial in dem Ballenformkanal zu komprimieren, um einen Ballen (B) zu formen, und ein Bindesystem zum Binden des Ballens (B) in einem Ballenformkanal einer Ballenpresse mit einem Paar Bindegarne (64, 66), die um gegenüberliegende Seiten des Ballens verlaufen, wobei das Bindesystem Folgendes umfasst: einen Knoter (40), der einen drehbaren Knüpferhaken (82) mit einer Drehachse (84), einen Bindegarnhalter (86), einen Bindegarnschneider (94) und ein Abstreiferelement (92), das dazu eingerichtet ist, mindestens einige Knoten von dem Knüpferhaken (82) zu entfernen, umfasst; wobei das Bindesystem dazu konfiguriert ist, während eines vollständigen Betriebszyklus des Bindesystems nacheinander einen ersten Knoten und einen zweiten Knoten in den Bindegarnen zu knüpfen, wobei mindestens der zweite Knoten ein Schlingenknoten ist, wobei der Knüpferhaken (82) zwischen einer ersten Position, in der der Knüpferhaken (82) die Bindegarne in Eingriff nimmt, und einer zweiten Position, in der ein durch den Knoter (40) geformter Knoten durch das Abstreiferelement (92) von dem Knüpferhaken (82) abgestreift wird, drehbar ist; wobei der Bindegarnhalter (86) Folgendes beinhaltet: eine erste Drehscheibe (86a), die eine erste Klemmkerbe (87b), die dazu eingerichtet ist, die Bindegarne (64, 66) während der Formung des ersten Knotens aufzunehmen, und eine zweite Klemmkerbe (87a), die dazu eingerichtet ist, die Bindegarne während der Formung des zweiten Knotens aufzunehmen, umfasst, eine Halterung (120), die angrenzend an einen Rand der ersten Drehscheibe (86a) positioniert ist und dazu eingerichtet ist, mit der ersten Drehscheibe (86a) zusammenzuwirken, um die Bindegarne mindestens während eines Teils des Betriebszyklus zu halten, eine Klemmplatte (122), die dazu eingerichtet ist, mit der Halterung (120) zusammenzuwirken, um die Bindegarne (64, 66) mindestens zu halten, bis der zweite Knoten durch das Abstreiferelement (92) abgestreift wird, wobei das Bindesystem ein Antriebssystem zum Drehen der ersten Drehscheibe (86a) umfasst, um die Bindegarne (64, 66) in einer von der ersten und der zweiten Kerbe (87a, 87b) gegen die Halterung (120) und/oder die Klemmplatte (122) zu klemmen, wobei die Halterung (120) und/oder die Klemmplatte (122) mindestens während des Abstreifens der Knoten durch das Abstreiferelement (92) dazu eingerichtet ist, in einem Zustand, in dem sich die Bindegarne (64, 66) in der ersten Klemmkerbe (87b) befinden, eine größere Klemmkraft auf die Bindegarne (64, 66) auszuüben als die Klemmkraft, die auf die Bindegarne (64, 66) in einem Zustand ausgeübt wird, in dem sich die Bindegarne in der zweiten Klemmkerbe (87a) befinden; wobei mindestens ein Teil der Klemmplatte (122) eine gekrümmte äußere Oberfläche umfasst, wobei die erste Drehscheibe (86a) dazu eingerichtet ist, in einem Zustand, in dem sich die Bindegarne (64, 66) in der zweiten Kerbe (87b) befinden, die Bindegarne (64, 66) über die gekrümmte äußere Oberfläche hinaus zu drehen, wodurch die Bindegarne (64, 66) aus dem Griff der Klemmplatte (122) und der Halterung (120) gelöst werden; wobei die gekrümmte äußere Oberfläche einen Bogen mit einem Radius (Rp) beinhaltet, der sich von einer Drehachse (126) der ersten Drehscheibe (86a) erstreckt;
wobei der Radius (Rp), der den Bogen der äußeren Oberfläche der Klemmplatte (122) definiert, einen radialen Abstand aufweist, der kleiner als oder gleich einem radialen Abstand (Rb) von der Drehachse (126) der ersten Drehscheibe zu dem innersten Teil der ersten Kerbe (87b) ist; und/oder der Radius (Rp), der den Bogen der äußeren Oberfläche der Klemmplatte (122) definiert, einen radialen Abstand aufweist, der größer als der radiale Abstand (Ra) von der Drehachse (126) der ersten Drehscheibe zu dem innersten Teil der zweiten Kerbe (87a) ist.

2. Ballenpresse gemäß Anspruch 1, wobei die Tiefe der zweiten Klemmkerbe (87a) relativ zu einem äußeren Umfang der ersten Drehscheibe (86) größer als die Tiefe der ersten Klemmkerbe (87b) ist.

3. Ballenpresse gemäß Anspruch 1 oder 2, wobei der Bindegarnhalter (86) eine zweite Drehscheibe (86b) umfasst, die zweite Drehscheibe (86b) zur Drehung mit der ersten Drehscheibe (86a) um eine Drehachse (126) fixiert ist, die zweite Drehscheibe (86b) eine erste Klemmkerbe (87b') und eine zweite Klemmkerbe (87a') umfasst und die Klemmplatte (122) dazu eingerichtet ist, mit der Halterung (120) zusammenzuwirken, um die Bindegarne (64, 66) zu halten, die sich in einer der Kerben (87a', 87b') der zweiten Drehscheibe (86b) befinden.

4. Ballenpresse gemäß Anspruch 3, wobei die erste und die zweite Drehscheibe (86a, 86b) aneinander fixiert sind, sodass mindestens eine erste Kerbe (87b) in der ersten Drehscheibe (86a) drehbezogen nach mindestens einer ersten Kerbe (87b') in der zweiten Drehscheibe (86b) ausgerichtet ist und sodass mindestens eine zweite Kerbe (87a) in der ersten Drehscheibe (86a) drehbezogen nach mindestens einer zweiten Kerbe (87a') in der zweiten Drehscheibe (86b) ausgerichtet ist.

5. Ballenpresse gemäß Anspruch 3 oder 4, wobei die Klemmplatte (122) zwischen der ersten und der zweiten Drehscheibe (86a, 86b) positioniert ist.

6. Ballenpresse gemäß einem der vorhergehenden Ansprüche, wobei die erste Drehscheibe (86a) dazu eingerichtet ist, sich relativ zu der Klemmplatte (122) zu drehen.

7. Ballenpresse gemäß einem der vorhergehenden Ansprüche, wobei die Halterung (122) elastisch in Richtung der Mitte (126) der ersten Drehscheibe (86a) vorgespannt ist.

8. Ballenpresse gemäß einem der vorhergehenden Ansprüche, wobei die erste Drehscheibe (86a) dazu eingerichtet ist, in einem Zustand, in dem sich die Bindegarne (64, 66) in der zweiten Kerbe (87a) der ersten Drehscheibe (86a) befinden und der zweite Knoten durch das Abstreifelement (92) abgestreift wird, die Bindegarne (64, 66) über ein Ende der Klemmplatte (122) hinaus zu drehen, wodurch die Bindegarne (64, 66) aus dem Griff der Klemmplatte (122) und der Halterung (120) gelöst werden.

9. Ballenpresse gemäß einem der vorhergehenden Ansprüche, wobei eine Drehung der zweiten Kerbe (87a) über ein Ende der Klemmplatte (122) hinaus und/oder über die gekrümmte äußere Oberfläche hinaus erreicht wird, indem ein zusätzlicher Zahnradabschnitt auf einer Antriebsscheibe (76) hinter einem Zahnradabschnitt (105) zum Betreiben der ersten Drehscheibe (86a) angeordnet wird.

10. Ballenpresse gemäß einem der vorhergehenden Ansprüche, wobei die Klemmplatte (122) schwenkbar (122a) an einer Befestigung angebracht ist und dazu eingerichtet ist, in Bezug auf die erste Drehscheibe (86a) in eine Position zu schwenken, in der die Bindegarne (64, 66) aus dem Bindegarnhalter (86) gelöst werden.

11. Ballenpresse gemäß Anspruch 10, wobei der Bindegarnhalter (86) eine Betätigungsformation (200, 210) umfasst, die dazu eingerichtet ist, die Klemmplatte (122) zu betätigen, wodurch bewirkt wird, dass die Klemmplatte (122) in die Position schwenkt, in der die Bindegarne (64) aus dem Bindegarnhalter (66) gelöst werden.

12. Ein Verfahren zum Binden eines Ballens in einer Ballenpresse, wobei das Verfahren Folgendes umfasst: Bereitstellen einer Ballenpresse gemäß einem der vorhergehenden Ansprüche; Knüpfen eines ersten Knotens und eines zweiten Knotens nacheinander in den Bindegarnen (64, 66) während eines vollständigen Betriebszyklus des Bindesystems, umfassend: wenn der erste Knoten geformt wird, Anordnen der Bindegarne in der ersten Klemmkerbe (87b); Klemmen der Bindegarne (64, 66) zwischen der Halterung (120) und dem Klemmelement (122); wobei der drehbare Knüpferhaken (82) einen ersten Knoten in den Bindegarnen (64, 66) knüpft; wobei der Schneider (94) die Bindegarne (64, 66) schneidet; wenn der zweite Knoten geformt wird, Anordnen der Bindegarne (64, 66) in der zweiten Klemmkerbe (87a); wobei das Antriebssystem die erste Drehscheibe (86a) dreht, um die Bindegarne (64, 66) zu klemmen, wobei die Halterung (120) die Bindegarne (64, 66) an die gekrümmte äußere Oberfläche des Klemmelements (122) klemmt, während sich die Bindegarne über die gekrümmte Oberfläche des Klemmelements bewegen; wobei der Knüpferhaken (82) einen zweiten Knoten knüpft, wobei der zweite Knoten ein Schlingenknoten ist; wobei die Halterung (120) die Bindegarne (64, 66) gegen Ende des zweiten Knotenbildungszyklus freigibt oder zumindest die Klemmkraft, die auf die Bindegarne (64, 66) ausgeübt wird, signifikant reduziert, während die Bindegarne (64, 66) ein Ende des Klemmelements (122) und/oder ein Ende der gekrümmten Oberfläche des Klemmelements (122) passieren, wodurch verhindert wird, dass der Bindegarnschneider (94) die Bindegarne schneidet.

13. Verfahren gemäß Anspruch 12, wobei das Abstreifelement (92) eine Abschirmung (121) umfasst; und das Verfahren ferner Folgendes umfasst: Anordnen des Bindegarns auf der Abschirmung (121) in einer ersten Position, wenn der erste Knoten geformt wird; und Anordnen des Bindegarns auf der Abschirmung (121) in einer zweiten Position, wenn der zweite Knoten geformt wird.

## Revendications

1. Une presse à balles comprenant une chambre de formation de balle (26), un piston à mouvement alternatif (30) configuré pour comprimer de la matière pour balle dans le canal de formation de balle afin de former une balle (B) et un système de liage pour lier la balle (B) dans un canal de formation de balle d'une presse à balles avec une paire de ficelles (64, 66) qui passent autour de côtés opposés de la balle, le système de liage incluant : un noueur (40) incluant un bec noueur rotatif (82) ayant un axe de rotation (84), un porte-ficelle (86), un dispositif de coupe de ficelle (94) et un élément d'arrachage (92) agencé pour retirer au moins certains nœuds du bec noueur (82) ; dans laquelle le système de liage est configuré pour faire un premier nœud et un second nœud successivement dans les ficelles pendant un cycle de fonctionnement complet du système de liage, au moins le second nœud est un nœud en boucle, dans laquelle le bec noueur (82) peut tourner entre une première position dans laquelle le bec noueur (82) met en prise les ficelles et une seconde position dans laquelle un nœud formé par le noueur (40) est arraché du bec noueur (82) par l'élément d'arrachage (92) ; le porte-ficelle (86) comprenant un premier disque rotatif (86a) incluant une première encoche de pinçage (87b) agencée pour recevoir les ficelles (64, 66) pendant la formation du premier nœud, et une seconde encoche de pinçage (87a) agencée pour recevoir les ficelles pendant la formation du second nœud, un dispositif de retenue (120) positionné de manière adjacente à une périphérie du premier disque rotatif (86a) agencé pour coopérer avec le premier disque rotatif (86a) pour maintenir les ficelles au moins pendant une partie du cycle de fonctionnement, une plaque de pinçage (122) agencée pour coopérer avec le dispositif de retenue (120) pour maintenir les ficelles (64, 66), au moins jusqu'à ce que le second nœud soit arraché par l'élément d'arrachage (92), dans laquelle le système de liage comprend un système d'entraînement destiné à faire tourner le premier disque rotatif (86a) pour pincer les ficelles (64, 66) dans l'une des première et seconde encoches (87a, 87b) contre le dispositif de retenue (120) et/ou la plaque de pinçage (122), dans laquelle le dispositif de retenue (120) et/ou la plaque de pinçage (122), au moins pendant l'arrachage des nœuds par l'élément d'arrachage (92), sont agencés pour appliquer une force de pinçage plus grande sur les ficelles (64, 66) dans un état dans lequel les ficelles (64, 66) se trouvent dans la première encoche de pinçage (87b) que la force de pinçage appliquée sur les ficelles (64, 66) dans un état dans lequel les ficelles se trouvent dans la seconde encoche de pinçage (87a) ; dans laquelle au moins une partie de la plaque de pinçage (122) inclut une surface externe incurvée, dans un état dans lequel les ficelles (64, 66) se trouvent dans la seconde encoche (87b), le premier disque rotatif (86a) est agencé pour faire tourner les ficelles (64, 66) au-delà de la surface externe incurvée, libérant ainsi les ficelles (64, 66) de la préhension de la plaque de pinçage (122) et du dispositif de retenue (120) ; la surface externe incurvée comprend un arc ayant un rayon (Rp) qui s'étend à partir d'un axe de rotation (126) du premier disque rotatif (86a) ;
dans laquelle le rayon (Rp) définissant l'arc de la surface externe de la plaque de pinçage (122) a une distance radiale qui est inférieure ou égale à une distance radiale (Rb) à partir de l'axe de rotation (126) du premier disque rotatif jusqu'à la partie la plus interne de la première encoche (87b) ; et/ou le rayon (Rp) définissant l'arc de la surface externe de la plaque de pinçage (122) a une distance radiale qui est supérieure à la distance radiale (Ra) à partir de l'axe de rotation (126) du premier disque rotatif jusqu'à la partie la plus interne de la seconde encoche (87a).

2. La presse à balles de la revendication 1, dans laquelle la profondeur de la seconde encoche de pinçage (87a), relativement à une circonférence externe du premier disque rotatif (86), est supérieure à la profondeur de la première encoche de pinçage (87b).

3. La presse à balles de la revendication 1 ou 2, dans laquelle le porte-ficelle (86) inclut un second disque rotatif (86b), le second disque rotatif (86b) est fixé pour tourner avec le premier disque rotatif (86a) autour d'un axe de rotation (126), le second disque rotatif (86b) inclut une première encoche de pinçage (87b') et une seconde encoche de pinçage (87a'), et la plaque de pinçage (122) est agencée pour coopérer avec le dispositif de retenue (120) pour maintenir les ficelles (64, 66) se trouvant dans l'une des encoches (87a', 87b') du second disque rotatif (86b).

4. La presse à balles de la revendication 3, dans laquelle les premier et second disques rotatifs (86a, 86b) sont fixés l'un à l'autre de sorte qu'au moins une première encoche (87b) dans le premier disque rotatif (86a) soit alignée en rotation avec au moins une première encoche (87b') dans le second disque rotatif (86b) et de sorte qu'au moins une seconde encoche (87a) dans le premier disque rotatif (86a) soit alignée en rotation avec au moins une seconde encoche (87a') dans le second disque rotatif (86b).

5. La presse à balles de la revendication 3 ou de la revendication 4, dans laquelle la plaque de pinçage (122) est positionnée entre les premier et second disques rotatifs (86a, 86b).

6. La presse à balles de l'une quelconque des revendications précédentes, dans laquelle le premier disque rotatif (86a) est agencé pour tourner relativement à la plaque de pinçage (122).

7. La presse à balles de l'une quelconque des revendications précédentes, dans laquelle le dispositif de retenue (122) est sollicité élastiquement vers le centre (126) du premier disque rotatif (86a).

8. La presse à balles de l'une quelconque des revendications précédentes, dans laquelle dans un état dans lequel les ficelles (64, 66) se trouvent dans la seconde encoche (87a) du premier disque rotatif (86a), et le second nœud est arraché par l'élément d'arrachement (92), le premier disque rotatif (86a) est agencé pour faire tourner les ficelles (64, 66) au-delà d'une extrémité de la plaque de pinçage (122), libérant ainsi les ficelles (64, 66) de la préhension de la plaque de pinçage (122) et du dispositif de retenue (120).

9. La presse à balles de l'une quelconque des revendications précédentes, dans laquelle une rotation de la seconde encoche (87a) au-delà d'une extrémité de la plaque de pinçage (122) et/ou au-delà de la surface externe incurvée est obtenue en plaçant un tronçon d'engrenage supplémentaire sur un disque d'entraînement (76) après un tronçon d'engrenage (105) pour faire fonctionner le premier disque rotatif (86a).

10. La presse à balles selon l'une quelconque des revendications précédentes, dans laquelle la plaque de pinçage (122) est attachée de manière pivotante (122a) à une pièce de montage et est agencée pour pivoter par rapport au premier disque rotatif (86a) jusqu'à une position dans laquelle les ficelles (64, 66) sont libérées du porte-ficelle (86).

11. La presse à balles selon la revendication 10, dans laquelle le porte-ficelle (86) inclut une formation d'actionnement (200, 210) qui est agencée pour actionner la plaque de pinçage (122) amenant ainsi la plaque de pinçage (122) à pivoter jusqu'à la position dans laquelle les ficelles (64) sont libérées du porte-ficelle (66).

12. Un procédé pour le liage d'une balle dans une presse à balles, le procédé incluant : la fourniture d'une presse à balles selon l'une quelconque des revendications précédentes ; la réalisation d'un premier nœud et d'un second nœud successivement dans les ficelles (64, 66) pendant un cycle de fonctionnement complet du système de liage, incluant : lors de la formation du premier nœud, la mise en place des ficelles dans la première encoche de pinçage (87b) ; le pinçage des ficelles (64, 66) entre le dispositif de retenue (120) et l'élément de pinçage (122) ; le bec noueur rotatif (82) réalisant un premier nœud dans les ficelles (64, 66) ; le dispositif de coupe (94) coupant les ficelles (64, 66) ; lors de la formation du second nœud, la mise en place des ficelles (64, 66) dans la seconde encoche de pinçage (87a) ; le système d'entraînement faisant tourner le premier disque rotatif (86a) afin de pincer les ficelles (64, 66), le dispositif de retenue (120) pinçant les ficelles (64, 66) contre la surface externe incurvée de l'élément de pinçage (122) à mesure que les ficelles se déplacent sur la surface incurvée de l'élément de pinçage ; le bec noueur (82) réalisant un second nœud dans lequel le second nœud est un nœud en boucle ; le dispositif de retenue (120) libérant les ficelles (64, 66), ou au moins réduisant de manière significative la force de pinçage appliquée aux ficelles (64, 66), vers la fin du cycle de formation de second nœud à mesure que les ficelles (64, 66) dépassent une extrémité de l'élément de pinçage (122) et/ou une extrémité de la surface incurvée de l'élément de pinçage (122), empêchant ainsi le dispositif de coupe de ficelle (94) de couper les ficelles.

13. Le procédé de la revendication 12, dans lequel l'élément d'arrachage (92) inclut un bouclier (« screen ») (121) ; et le procédé inclut en outre la mise en place de ficelle sur le bouclier (121) dans une première position lors de la formation du premier nœud ; et la mise en place de ficelle sur le bouclier (121) dans une seconde position lors de la formation du second nœud.
